# EUROPEAN PATENT APPLICATION

(11) **EP 1 498 571 A1**
(43) Date of publication of application: **19.01.2005**
(21) Application number: 03102144.7
(22) Date of filing: 14.07.2003
(51) Int. Cl.: E06C 7/48, E06C 1/34, F16B 2/12

(54) **Ladder safety device**

(71) Applicant: Stienstra, Ronaldus, Johannes, 2022BR Haarlem (NL); De Haan, Theo, Dokus, 2034PR Haarlem (NL); De Vries, George, 2023 PJ Haarlem (NL)
(72) Inventor: Stienstra, Ronaldus, Johannes, 2022BR Haarlem (NL); De Haan, Theo, Dokus, 2034PR Haarlem (NL); De Vries, George, 2023 PJ Haarlem (NL)
(74) Representative: Metman, Karel Johannes

(57) **Abstract**

Ladder safety device (8, 8') for clamping a ladder (1) to a rain gutter (4) or the like in order to keep the ladder (1) in a fixed position relative to the rain gutter (4) or the like. The ladder safety device (8, 8') comprises a mounting assembly (9) for mounting the ladder safety device (8, 8') to the ladder, and a clamping assembly (10) connected to the mounting assembly (9) and adapted to clamp the ladder safety device (8, 8') to at least one wall (3) of the rain gutter (4) or the like. The clamping assembly (10) comprises at least two clamping means (15) which are slidably guided by a guide (11) and adapted to be slidably moved with respect to each other and the mounting assembly (9) by means of an adjustment mechanism (19, 19') in order to be moved against or away from the at least one wall (3) of the rain gutter or the like when clamped thereto. Due to the sliding movement of the clamping means (15), the ladder safety device is adapted to be clamped to various rain gutters or the like provided with a wide range of wall thicknesses and wall configurations.

## Description

The invention relates to a ladder safety device for clamping a ladder to a rain gutter or the like in accordance with the preamble of claim 1.

Ladder safety devices of this type are already known, for example from DE 3504777.

DE 3504777 discloses a securing device for securing a ladder to an edge of a rain gutter. The securing device is adapted to be mounted to a ladder by means of a holder, and further comprises a fastener which is pivotably connected to the holder by an axis. The fastener is provided with two legs which are pivotably connected to each other by means of a pivot pin, and the pivoting movement of the two legs with respect to each other is effected by means of a tightening screw. However, as the legs of the fastener are pivotably connected to each other, the fastener of the securing device is only properly and reliably engaged with a wall of the rain gutter when the wall of the rain gutter is singular and/or thin, whereby the proper working of the securing device depends on the thickness and/or shape of the rain gutter.

The object of the invention is to provide a ladder safety device for clamping a ladder to a rain gutter or the like, wherein the ladder safety device is adapted to be properly clamped to various rain gutters or the like provided with a wide range of wall thicknesses and wall configurations.

In order to accomplish that objective, the ladder safety device according to the invention is characterized by the features of the characterizing portion of claim 1.

In the ladder safety device according to claim 1, the sliding movement of the at least two clamping means against or away from the at least one wall of the rain gutter has the advantage, that the clamping capacity of the clamping assembly is independent from the mutual position of the clamping means with respect to each other. As a result, the ladder safety device according to the invention is adapted to be clamped to various rain gutters or the like provided with a wide range of wall thicknesses and wall configurations.

According to an embodiment of the invention, the clamping means include arms having gripping means adapted to engage the at least one wall, the arms having a spacing which is at a minimum at the position of the gripping means. In this manner, the clamping means are adapted to be moved against the at least one wall of the rain gutter or the like, even when such wall is provided with a beading or the like, whereby the ladder safety device is adapted to be clamped to rain gutters or the like provided with such a beading.

According to an embodiment of the invention, the adjustment mechanism comprises at least one screwed rod having two opposite screwed portions, and is each of the screwed portions in engagement with only one of the at least two clamping means by means of a screwed portion provided at the at least two clamping means, whereby the at least two clamping means are slidably movable against or away from the at least one wall of the rain gutter simultaneously and in opposite direction with respect to each other by means of a rotation of the at least one screwed rod. Preferably, the at least one screwed rod having two opposite screwed portions is movable and spring biased in its axial direction with respect to the guide in order to enable a spring loaded sliding movement of the at least two engaged clamping means in their same direction with respect to the mounting assembly. As a result, the ladder safety device is adapted to be clamped to both an inner side and an outer side of a wall of the rain gutter or the like in a simple manner by the rotation of the at least one rod having two opposite screwed portions, while the spring loaded sliding movement of the at least one screwed rod having two opposite screwed portions allows a small displacement of the at least two engagement means in their same direction when one of the at least two clamping means reaches the wall of the rain gutter or the like first.

According to an alternative embodiment of the invention, the adjustment mechanism of the clamping assembly comprises at least two screwed rods, wherein each of the at least two screwed rods is in engagement with only one of the at least two clamping means by means of a screwed portion provided at the at least two clamping means, whereby the at least two clamping means are slidably movable against or away from the at least one wall of the rain gutter or the like by means of a rotation of the screwed rods. In this manner, the ladder safety device is adapted to be clamped to both the inner and outer side of the wall of the rain gutter or the like in a simple manner due to the rotation of the screwed rods. Moreover, as the at least two clamping means are movable independently from each other, the ladder safety device may be clamped to all kind of rain gutters or the like as long as they fit between the at least two clamping means of the ladder safety device.

These and other aspects and advantages of the invention will be apparent from the following description with reference to the drawings, which schematically show two embodiments of the invention, and wherein
Fig. 1 is a schematic front view of a first embodiment of the ladder safety device according to the invention, whereby the ladder safety device clamps a ladder to a rain gutter;
Fig. 2 is a perspective bottom view of the first embodiment of the ladder safety device according to the invention;
Fig. 3 is a perspective bottom view of the first embodiment of the ladder safety device according to the invention, when viewed the clamping means include arms having gripping means adapted to engage the at least one wall, the arms having a spacing which is at a minimum at the position of the gripping means. from the other side; and
Fig. 4 is a perspective bottom view of a second embodiment of the ladder safety device according to the invention.

In the drawings, the corresponding parts of the two embodiments of the invention shown in the figures are provided with the same reference numbers.

The ladder safety device according to the invention is intended for clamping a ladder to a rain gutter or the like when the ladder is put against an edge of the rain gutter or the like. In this manner, the ladder is prevented from falling over or turning around, especially when a person is climbing the ladder, which makes the ladder much safer to use.

Hereinafter, first a detailed description is given of the first embodiment of the ladder safety device according to the invention, followed by a brief description of the second embodiment of the ladder safety device according to the invention.

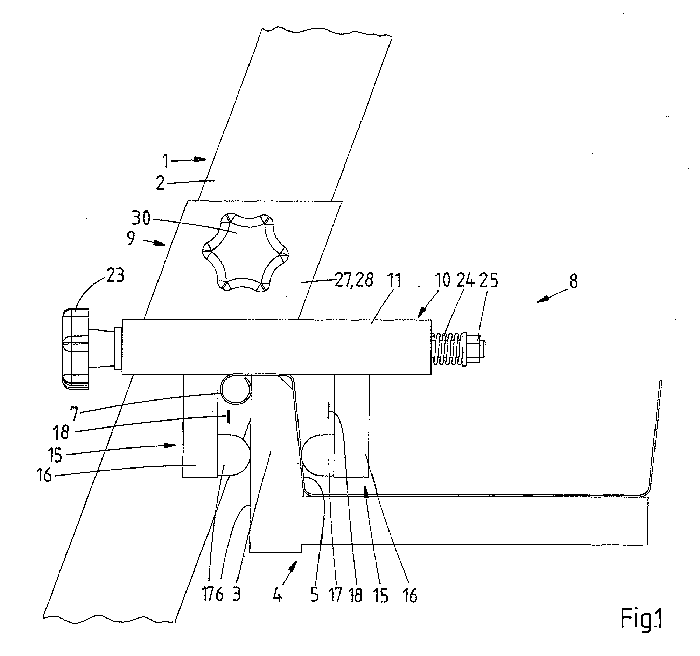

With reference to Fig. 1, a ladder 1 having two stands 2 is positioned against an upright wall 3 of a rain gutter 4 having an inner side 5 and an outer side 6. Of course, the upright wall may also be provided at an edge of a roof, and the ladder may for example also be positioned against a scaffolding. As shown, the upper portion of the wall 3 of the rain gutter 4 is provided with a beading 7 which protrudes from an outer side 6 of the wall 3. The first embodiment of the ladder safety device 8 is fixed to the wall 3 of the rain gutter 4 and one stand 2 of the ladder 1. In order to securely prevent the ladder 1 from falling over or turning around, both stands 2 of the ladder 1 are fixed to the wall 3 of the rain gutter 4 by means of two such ladder safety devices 8, wherein this two ladder safety devices 8 are symmetrically formed with respect to the ladder 4.

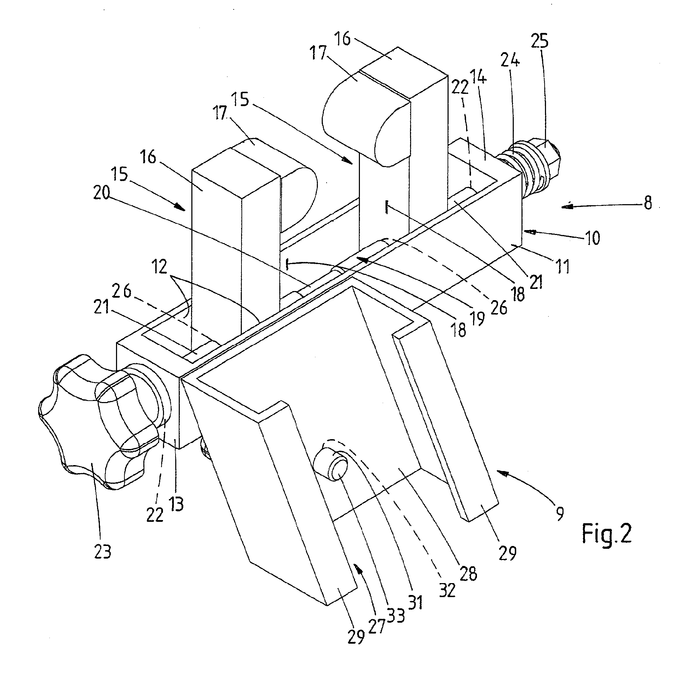

With reference to Fig. 2, the first embodiment of the ladder safety device 8 is shown in more detail. This first embodiment comprises a mounting assembly 9 for mounting the ladder safety device 8 to one of the stands 2 of the ladder 1, and a clamping assembly 10 connected to the mounting assembly 9 and adapted to clamp the ladder safety device 8 to the wall 3 of the rain gutter 4. The clamping assembly 10 comprises an U-bar 11 having two opposite extending inner sides 12 which extend substantially parallel to each other. The U-bar 11 of the clamping assembly 10 is fixedly connected to the mounting assembly 9 such that the U-bar 11 is enabled to extend over the upright edge 3 of the rain gutter 4 when the mounting assembly 9 is mounted to one of the stands 2 of the ladder 1. The U-bar 11 is provided with a first and a second endplate 13, 14 respectively at its outer ends near and opposite to the mounting assembly 9. The clamping assembly 10 is further provided with two clamping means 15, each comprising a square bar 16 as an arm provided with a rounded rubber strip 17 as gripping means. This gripping means may also be made of any other kind of compressive material that provides a frictional contact with the wall of the rain gutter 4. The square bars 16 are fitted within the U-bar 11 such that they protrude in the same direction from the U-bar 11, while a small play remains between the inner sides 12 of the U-bar 11 and the square bars 16. Due to the small play, the U-bar 11 forms a guide which is adapted to slidably guide the square bars 16 in a longitudinal direction with respect to the U-bar 11. The rounded rubber strips 17 are positioned at the outer ends of the square bars 16 and protrude from the square bars 16 such that the rounded rubber strips 17 are facing each other, and such that a free space 18 exists between the rounded rubber strips 17 and the U-bar 11. As a result, the square bars 16 provided with rounded rubber strips 17 have a spacing which is at a minimum at the position of the rounded rubber strips 17, whereby the square bars 16 provided with rounded rubber strips 17 are adapted to accommodate a beading 6 such as provided at the wall 3 of the rain gutter 4 as shown in Fig. 1.

According to Fig. 2, the clamping assembly 10 of the first embodiment of the ladder safety device 8 comprises an adjustment mechanism 19 which is positioned at the U-bar 11 of the clamping assembly 10. This adjustment mechanism 19 comprises a screwed rod 20 having two opposite screwed portions 21. The screwed rod 20 is positioned within the U-bar 11 by means of a hole 22 provided in each of the first and the second endplate 13, 14 of the U-bar 11 such, that the screwed rod 20 is allowed to rotate around its axis and to slide in its axial direction with respect to this U-bar 11. The adjustment mechanism 19 further comprises a knob 23 mounted to the screwed rod 20 and protruding from the first endplate 13. The knob 23 is provided to facilitate a manual rotation of the screwed rod 20. At the second endplate 14, the adjustment mechanism 19 is provided with a spring 24 which is biased between the second endplate 14 and a locked nut 25 mounted at the screwed rod 20. In this manner the screwed rod 20 is enabled to make a spring loaded sliding movement in its axial direction, whereby the knob 23 abuts the first endplate 13 due to the biasing of the spring 24.

As shown in Fig. 2, each of the screwed portions 21 of the screwed rod 20 of the first embodiment of the ladder safety device 8 is in engagement with a screwed portion 26 provided at each square bar 16. Due to this engagement, the two square bars 16 are slidably moveable simultaneously and in opposite direction with respect to each other by a rotation of the screwed rod 20, while this sliding movement of the square bars 16 is guided by the U-bar 11 of the clamping assembly 10. Moreover, due to this engagement, the square bars 16 are kept in their protruding position with respect to the U-bar 11 of the clamping assembly 10.

With reference to Fig. 2, the mounting assembly 9 of the first embodiment of the ladder safety device 8 is provided with a mounting member 27 comprising a U-bar 28 which is at each of its two upright edges provided with a strip 29, which strips 29 are facing each other. The U-bar 11 of the clamping assembly 10 and the U-bar 28 of the mounting assembly 9 are positioned with respect to each other at an angle of about 75 degrees in their longitudinal directions. The mounting member 9 is dimensioned such that it is adapted to fit over the stand 2 of the ladder 1 without being hampered by the steps of the ladder, and such that some play exists with respect to the stand 2 of the ladder 1. Due to the described mutual position of the U-bars 11, 28 and the play with respect to the stand of the ladder, the ladder safety device is arranged to clamp the ladder 1 to the rain gutter 4 at an inclination between 70 and 80 degrees with respect to a substantially horizontal underground (not shown) the ladder 1 is standing on.

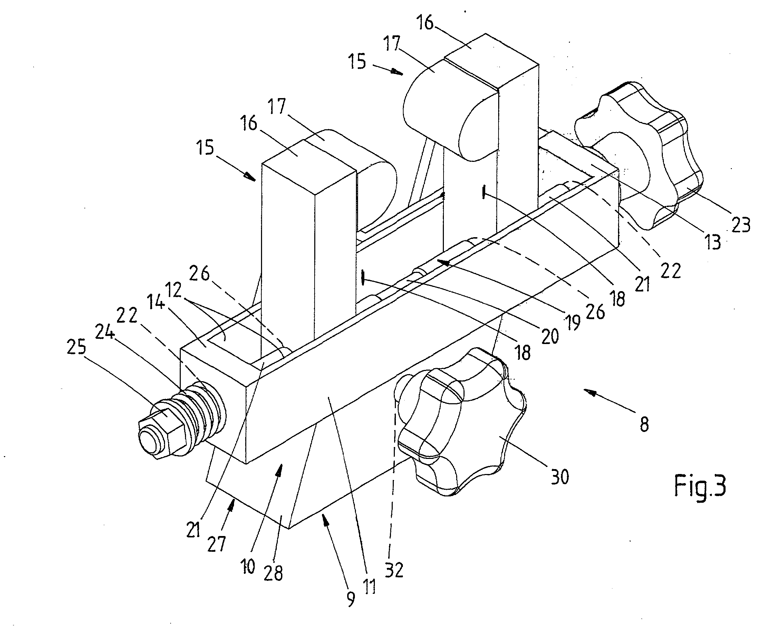

With reference to Fig. 2 and 3, the mounting assembly 9 of the first embodiment of the ladder safety device 8 is further provided with a screw knob 30 as a fixing element. The screw knob 23 is provided with a screwed portion 31 which is in engagement with a screwed portion 32 provided at the U-bar 28 of the mounting assembly 9. The screwed portion 32 of the U-bar 28 and the screw knob 30 are positioned such, that an outer end 33 of the screwed portion 31 of the screw knob 30 protrudes within the U-bar 28. The mounting assembly 9 is adapted to be fixed to the stand 2 of the ladder 1 by means of a rotation of the screw knob 30, whereby due to the movement the screw knob 30 the stand 2 of the ladder 1 is clamped between the outer end 33 of the screw knob 30 which extends within the U-bar 28 of the mounting assembly 9, and the strips 29 provided at the U-bar 28 of the mounting assembly 9.

The mounting assembly 9 and the clamping assembly 10, with the exception of the rounded rubber strips 17, are made of metal, such as stainless steel or anodised aluminium.

With reference to Figs. 1 to 3, the working of the first embodiment of the ladder safety device 8 is as follows:

First, the ladder 1 is put against the upright edge 3 of the rain gutter 4 in an inclined position, for example at an angle between 70 and 80 degrees with respect to the substantially horizontal underground (not shown) where the ladder 1 is standing on.

Subsequently, the knob 23 of the clamping assembly 10 is rotated such that the square bars 16 are moved away with respect to each other to a position which allows the rounded rubber strips 17 to be placed over the upright edge 3 of the rain gutter 4 to which the ladder 1 is positioned, and the screw knob 30 of the mounting assembly 9 is rotated such, that the outer end 33 of the screwed portion 32 of the screw knob 30 withdraws with respect to the strips 29 provided at this U-bar 28.

Subsequently, the mounting assembly 9 is slid over one stand 2 of the ladder 1, wherein the ladder safety device 8 is oriented such, that the square bars 16 are facing the upright edge 3 of the rain gutter 4. The mounting assembly 9 is slid over the stand 2 of the ladder 1 until the U-bar 11 of the clamping assembly 10 hits the upright edge 3 of the rain gutter 4.

Subsequently, the knob 23 of the clamping assembly 10 is rotated such, that the rounded rubber strips 17 are moved against the inner and outer wall 5, 6 of the rain gutter 4 in order to be clamped to the walls 5, 6 of the rain gutter 4. Due to the force exerted to the rounded rubber strips 17, each strip 17 will conform to the side 5, 6 of the wall 3 of the rain gutter 4 to which it is moved against. In the case that one rounded rubber strip 17 is moved against one side 5, 6 of the wall 3 of the rain gutter 4 first, the square bars 16 are allowed to move in their same direction with respect to the U-bar 11 of the clamping assembly 10 by the spring loaded sliding movement of the screwed rod 20 with respect to the U-bar 11 of the clamping assembly 10. Moreover, due to the small play between the stand 2 of the ladder 1 and the mounting member 9, the whole ladder safety device 8 is allowed to be slightly moved with respect to the wall 3 of the rain gutter 4.

Finally, the screwed knob 30 of the mounting assembly 9 is rotated such that the mounting assembly 9 is fixed to the stand 2 of the ladder 1.

As a result, the ladder 1 is clamped to the wall 3 of the rain gutter 4 while it rests on the wall 3.

When both stands 2 of the ladder 1 are clamped to the rain gutter 4 by means of two ladder safety devices 8 according to the first embodiment of the invention, the above described procedure has to be repeated for this second ladder safety device 8 in the same order. Accordingly, the above mentioned procedure has to be executed in reversed order when the ladder 1 needs to be taken away from the rain gutter 4.

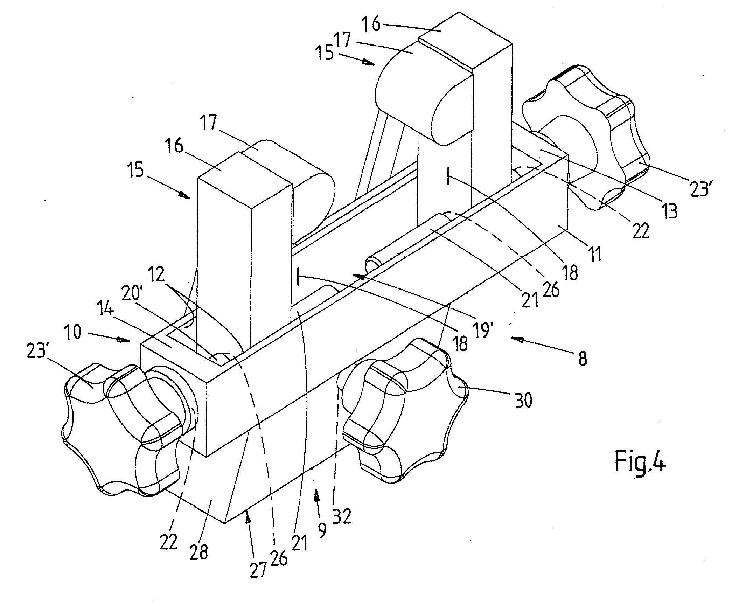

Hereinafter, the second embodiment of the ladder safety device is discussed briefly with reference to Fig. 4, wherein the parts corresponding with the parts of the first embodiment are provided with the same reference numbers.

With reference to Fig. 4, the second embodiment of the ladder safety device 8' is provided with an alternative adjustment mechanism 19', which comprises two screwed rods 20', wherein each screwed rod 20' is in engagement with one square bar 16 by means of the screwed portion 26 provided in the square bars 16. Each screwed rod 20' is rotatably positioned within the U-bar 11 of the clamping assembly 10 by means of the holes 22 in the first and second endplate 13, 14 provided at the U-bar 11. Each screwed rod 20' is provided with a knob 23' for facilitating a manual rotation of each screwed rod 20'. As the two screwed rods 20' are rotatable independent from each other, each square bar 16 is slidably movable independent from its opposite square bar 16 too. The alternative adjustment mechanism 19' allows this second embodiment of the ladder safety device 8' to be clamped to any kind of rain gutter 4 or the like as long as its wall 3 fits between the two square bars 16 provided with the rounded rubber strips 17, without the need for a sliding movement of the screwed rod 20 within the adjustment mechanism 19 as is the case with the first embodiment of the ladder safety device 8.

The working of the second embodiment of the ladder safety device 8' is similar to the working of the first embodiment, with the exception that the two knobs 23' of the adjustment mechanism 19' have to be rotated instead of the one knob 23' of the first embodiment in order to clamp the ladder safety device 8' to the wall 3 of the rain gutter 4.

The mounting assembly 9 and the clamping assembly 10 of the ladder safety device 8, 8' according to the invention, with the exception of the gripping means 17 may be made of any kind of hard material, such as stainless steel or anodised aluminium.

As will be understood from the preceding description, the ladder safety device according to the invention is adapted to be clamped to any kind of wall of a rain gutter or the like due to the sliding movement of the clamping means with respect to the guide, whereby the clamping ability is independent from the shape and/or thickness of the wall of the rain gutter or the like.

In the described embodiments of the ladder safety device according to the invention, the clamping means comprise a square bar provided with a rounded rubber strip. The clamping means may have any kind of shape, such as curved or hooked, as long as the arms of the gripping means have a spacing which is at a minimum at the position of the gripping means in order to accommodate a protruding beading or the like provided at the wall of a rain gutter or the like, when clamped thereto.

In the described embodiments of the ladder safety device according to the invention, the ladder safety device is clamped to a wall of a rain gutter having inner and outer sides which extend at a small inclination relative to each other as shown in Fig. 1. Due to the rounded shape of the gripping means, the clamping means are adapted to be clamped to such non parallel sides. Moreover, due to the rounded shape of the gripping means, the clamping means are also adapted to be clamped to a wall of a rain gutter or the like having a small inclination itself.

In the described embodiments of the ladder safety device according to the invention, the ladder safety device rests on the wall of the rain gutter at an angle of about 75 degrees. As a small play exists between the mounting member and the stand of the ladder, an angle between 70 and 80 degrees is allowed.

As a matter of course, the ladder safety device according to the invention is not restricted to the particular embodiments shown in the drawings and described hereinbefore, but may be varied in different manners within the scope of the invention, as defined by the claims. For example, the clamping means may be adapted to engage the inner sides of opposite walls of a rain gutter, that is, the clamping means are moved away from each other to clamp the device by pushing the gripping means against the inner sides of both walls of the rain gutter.

## Claims

1. Ladder safety device (8, 8') for clamping a ladder (1) to a rain gutter (4) or the like in order to keep the ladder (1) in a fixed position relative to the rain gutter (4) or the like, comprising a mounting assembly (9) for mounting the ladder safety device (8, 8') to the ladder, and a clamping assembly (10) connected to the mounting assembly (9) and adapted to clamp the ladder safety device (8, 8') to at least one wall (3) of the rain gutter (4) or the like, wherein the clamping assembly (10) comprises at least two clamping means (15) which are adapted to be moved with respect to each other by means of an adjustment mechanism (19, 19') in order to be moved against or away from the at least one wall (3) of the rain gutter or the like when clamped thereto, **characterized in that** the clamping assembly (10) comprises a guide (11) which is adapted to slidably guide the clamping means (15) with respect to the mounting assembly (9).

2. Ladder safety device (8, 8') according to claim 1, wherein the clamping means (15) include arms (16) having gripping means (17) adapted to engage the at least one wall (3), the arms (16) having a spacing which is at a minimum at the position of the gripping means (17).

3. Ladder safety device (8) according to claim 1 or 2, wherein the adjustment mechanism (19) comprises at least one screwed rod (20) having two opposite screwed portions (21), and wherein each of the screwed portions (21) is in engagement with only one of the at least two clamping means (15) by means of a screwed portion (26) provided at the at least two clamping means (15), whereby the at least two clamping means (15) are slidably movable against or away from the at least one wall (3) of the rain gutter (4) or the like simultaneously and in opposite direction with respect to each other by means of a rotation of the at least one screwed rod (20).

4. Ladder safety device (8) according to claim 3, wherein the at least one screwed rod (20) having two opposite screwed portions (21) is movable and spring biased in its axial direction with respect to the guide (11) in order to enable a spring loaded sliding movement of the at least two engaged clamping means (15) in their same direction with respect to the mounting assembly (9).

5. Ladder safety device (8') according to claim 1 or 2, wherein the adjustment mechanism (19') of the clamping assembly (10) comprises at least two screwed rods (20'), and wherein each of the at least two screwed rods (20') is in engagement with only one of the at least two clamping means (15) by means of a screwed portion (21') provided at the at least two clamping means (15), whereby the at least two clamping means are slidably movable against or away from the at least one wall (3) of the rain gutter (4) or the like by means of a rotation of the screwed rods (20').

6. Ladder safety device (8, 8') according to claim 3, 4 or 5, wherein each screwed rod (20, 20') is provided with a knob (23, 23') extending from the guide (11) in order to allow a manual rotation of each screwed rod(20, 20').

7. Ladder safety device (8, 8') according to any one of the preceding claims, wherein each of the at least two clamping means (15) comprises gripping means (17) which are adapted to conform to the at least one wall (3) of the rain gutter (4) or the like when the clamping means (15) are moved against the at least one wall (3) of the rain gutter (4) or the like.

8. Ladder safety device (8, 8') according to claim 7, wherein the gripping means (17) are made of a compressible material, such as rubber.

9. Ladder safety device (8, 8') according to any one of the preceding claims, wherein the mounting assembly (9) comprises a mounting member (27) fitting over the stand (2) of the ladder (1) and being provided with a fixing element(30), such as a screw knob (30), such that the mounting assembly (9) is fixed to the ladder (1) by the movement of the fixing element (30).

10. Ladder safety device (8, 8') according to any one of the preceding claims, wherein the guide (11) of the clamping assembly is fixedly connected to the mounting assembly (9).

11. Ladder safety device (8, 8') according to any one of the preceding claims, wherein the ladder safety device (8, 8') is arranged to keep the ladder (1) in a fixed position relative to the rain gutter (4) or the like when clamped thereto, such that the ladder (1) is enabled to be inclined at an angle between 70 and 80 degrees with respect to a horizontal underground where the ladder (1) is standing on.
